Europäisches Patentamt

European Patent Office

Office européen des brevets

(19)

(11) Publication number: **0 079 114**
**B1**

(12) EUROPEAN PATENT SPECIFICATION

(45) Date of publication of patent specification: **17.09.86**

(51) Int. Cl.⁴: **B 60 K 41/28**

(21) Application number: **82303026.7**

(22) Date of filing: **11.06.82**

(54) **Automatic gear shifting device.**

(30) Priority: **09.11.81 GB 8133800**

(43) Date of publication of application:
**18.05.83 Bulletin 83/20**

(45) Publication of the grant of the patent:
**17.09.86 Bulletin 86/38**

(84) Designated Contracting States:
**AT BE CH DE FR IT LI LU NL SE**

(56) References cited:
**EP-A-0 008 495**
**BE-A- 554 904**
**GB-A-2 018 917**
**US-A-4 194 608**
**US-A-4 208 929**
**US-A-4 294 341**

(73) Proprietor: **TRANSTECH INDUSTRIAL CORPORATION**
**No. 31, Chi Nan Road Sec. 3**
**Taipei (TW)**

(72) Inventor: **Long, Shin Jow**
**No. 254, Cheng Kung Road Sec. 2**
**Nei Hu Taipei (TW)**
Inventor: **Long, Tiau Jow**
**No. 254, Cheng Kung Road Sec. 2**
**Nei Hu Taipei (TW)**

(74) Representative: **Harrison, Michael Robert et al**
**Urquhart-Dykes & Lord 47 Marylebone Lane**
**London W1M 6DL (GB)**

Courier Press, Leamington Spa, England.

## Description

This invention relates to automobile transmissions, more particularly to an automatic gear shifting device for automobile transmissions.

There are generally two types of automobile transmissions for changing the ratio (hereafter called "gear ratio") of power flow from the engine to the drive axle. One is the manually operated gear shift type which is used with a disc type clutch, and the other is the automatic type provided with a hydraulic torque converter and a planetary gear system. Both types of transmissions have been conventionally used but each has its distinct disadvantages. Conventional manual transmissions require a certain level of skill to be operated efficiently and conventional automatic transmissions are energy consuming, bulky and expensive to manufacture.

In view of the aforesaid disadvantages of conventional automobile transmissions, the present invention offers a novel automatic gear shifting device for operating a gear shift type transmission in conjunction with a disc type clutch for an automobile, in which the gear shifting operation may be selectively operated automatically or manually and in which less energy is consumed and the cost of manufacture is less than conventional automatic transmissions.

It has previously been proposed in GB—A—2 018 917 to provide an automatic gear shifting device of use in an automobile having a transmission having gears assembled to be selectively shifted to transmit power from an engine to a drive axle of an automobile at a predetermined gear ratio and having a plurality of transmission gear positions each achieving a specific gear ratio; and a clutch device capable of engaging to transmit and disengaging to interrupt power from the engine to said transmission; said automatic gear shifting device comprising detectors for detecting engine speed, automobile road speed transmission gear position, clutch position, and for delivering electrical control signals responsive to engine speed, road speed, transmission gear position and clutch position; actuators provided with a flexible diaphragm operable by a vacuum produced in an intake passage of the engine of the automobile for engaging and disengaging said clutch device and opening and closing of a throttle valve of the automobile; and an actuator of unspecified type for performing the gear shifting of said transmission; valve means operable by electrical operation signals for admitting and interrupting said vacuum to said vacuum operated actuators; and a control unit adapted to receive said electrical control signals and produce said electrical operation signals in response to said electrical control signals in accordance with a program to cause said valve means to operate so that the actuators and consequently the throttle valve, clutch device and transmission operate in association with each other to change the gear ratio to meet the driving speed and load conditions of the automobile.

It has also been proposed in BE—A—554 904 to utilise the vacuum derived from the intake passage of an engine to perform certain functions.

The present invention seeks to improve on the above proposals by providing a gear shifting device which may be readily incorporated in an existing automobile having a manual gear change so as to make the operation of the gears either manual or automatic at the will of the driver of the automobile. No previous proposals have sought to provide such a facility in a simple manner.

## Summary of the invention

According to the present invention there is provided an automatic gear shifting device for use in an automobile having a transmission T having gears assembled to be selectively shifted to transmit power from an engine to a drive axle of an automobile at a predetermined gear ratio and having a plurality of gear positions each achieving a specific gear ratio; and a clutch device C capable of engaging to transmit and disengage to interrupt power from the engine to said transmission T; said automatic gear shifting device comprising detectors D1—D10 for detecting engine speed, automobile road speed, transmission gear position, clutch position and for delivering electrical control signals responsive to engine speed, transmission gear position and clutch position actuators A1—A6 provided with a flexible diaphragm 23 operable by a vacuum produced in an intake passage M of the engine of the automobile for performing the gear shifting of said transmission T, engaging and disengaging of said clutch device and opening and closing of a throttle valve 92A of the automobile valve means V1, V2A, V2B, V3A, V3B, V4, V5 and V6 operable by electrical operation signals for admitting and interrupting said vacuum to said actuators A1—A6; and a control unit U adapted to receive said electrical control signals and produce a said electrical operation signals in response to said electrical control signals in accordance with a program to cause said valve means V1—V6 to operate so that the actuators and consequently the throttle valve 92A, clutch device C and transmission T operate in association with each other to change the gear ratio to meet the driving speed and load conditions of the automobile; characterised in that said automatic gear shifting device has an accelerator pedal 90 provided with a trigger switch D11 for delivering a signal in response to the movement of said accelerator pedal 90 for delivering a signal to said control unit U to cause said control unit U to deliver operation signals to said actuators A1—A6 according to a predetermined sequence program; and said transmission T is provided with a shift lever 64 for manually changing the gear positions, said clutch device C is provided with a foot pedal C2 for manually engaging and disengaging said clutch device C and said control unit U is provided with a mode selection switch 8-M/A for enabling said control unit U to function when said switch 8-M/A is turned in one position, and for enabling the transmission T to be operated manually by said shift lever 64 and the clutch device C to be operated manually by said ·foot pedal C2 when said switch 8-M/A is turned to another position.

Brief description of the drawings

Fig. 1 is a schematic diagram of an embodiment of the automatic gear shifting device of this invention, showing the general arrangement of its component members.

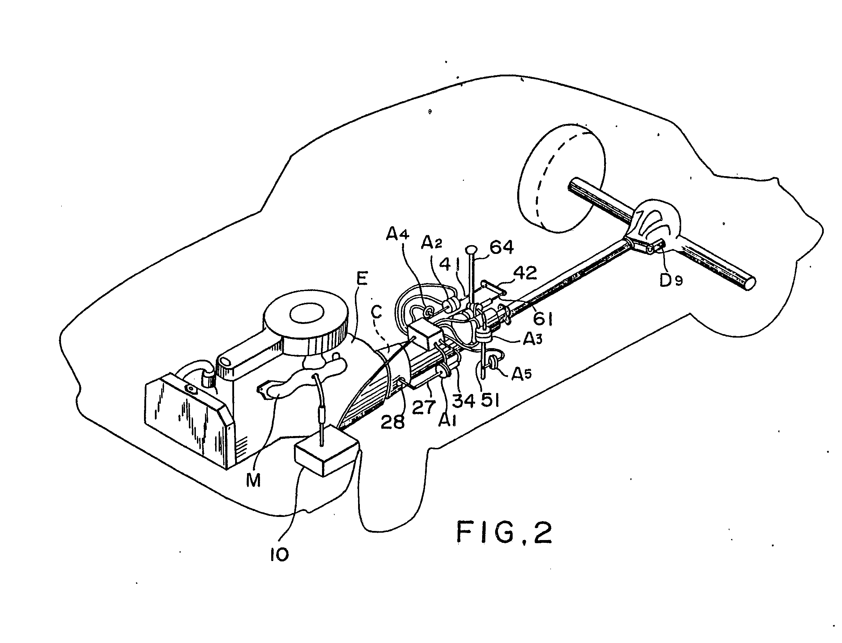

Fig. 2 is a schematic, oblique perspective view of the embodiment shown in Fig. 1, showing the special arrangement of the actuators.

Fig. 3 is a cross-sectional view to the first actuator for operating the clutch, according to the device of this invention.

Fig. 4 is an oblique, perspective view of the second, third, fourth and fifth actuators for operating the gear-shift mechanism, showing their arrangement with respect to the gear-shift mechanism.

Fig. 5 is a schematic end view of the shift rod and shift bars of the transmission employed in the device of this invention.

Fig. 6 is a fragmentary, oblique, perspective drawing showing the connection of the shift lever, shift rod and shift arm for operating the transmission.

Fig. 7 is a schematic, cross-sectional view of a two-way solenoid valve employed in the device of this invention.

Fig. 8 is a schematic, cross-sectional view of a three-way solenoid valve employed in the device of this invention.

Fig. 9 is a cross-sectional view of a double-acting type actuator employed in the device of this invention.

Fig. 10 is a cross-sectional view of a single-acting type actuator employed in the device of this invention.

Fig. 11 is a diagram showing the transmission gear positions of the embodiment of Figs. 1 and 4.

Fig. 12 is an oblique perspective drawing showing the arrangement of the ninth detector for detecting the driving speed.

Fig. 13 is a block diagram showing the principal arrangement of the control unit of the device of this invention.

Fig. 14 is a flow chart of a program adapted to be incorporated into the control unit of the device of this invention.

Fig. 15 is a schematic diagram of a second embodiment of the automatic gear shifting device of this invention.

Fig. 16 is a schematic, oblique perspective view of the gear shifting mechanism according to the second embodiment of this invention, showing the arrangement of the shift bars and the shift lever.

Fig. 17 is a cross sectional view of an auxiliary actuator employed in the second embodiment of this invention.

Fig. 18 is cross sectional view of the shift lever according to the second embodiment of this invention.

Fig. 19 is a fragmentary, oblique, perspective view of the lower end of the shift lever and the latch plate as shown in Fig. 18.

Detailed description of the invention

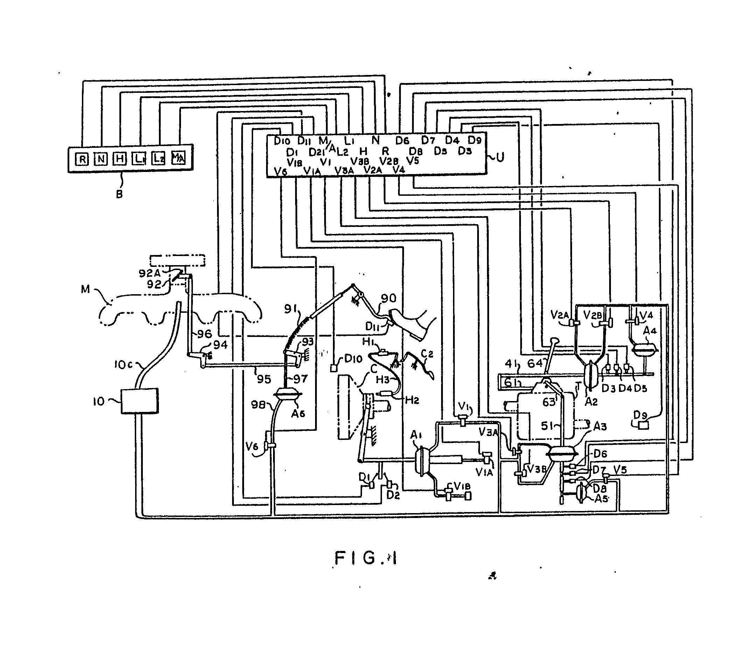

As shown in Fig. 1 the automatic gear shifting device of this invention comprises a disc clutch generally designated by C; a first actuator A1; a gear-shift type transmission generally designated by T having a shift lever 64; shift rod 61 operable by shift lever 64 and also by second actuator A2 having push rod 41; a shift arm 63 operable by shift lever 64 and also by third actuator A3 having push rod 51; a fourth actuator A4 adapted to hold push rod 41 and shift rod 61 in a neutral position; fifth actuator A5 adapted to hold push rod 51 and shift arm 63 in a neutral position; sixth actuator A6 adapted to operate throttle valve 92A of carburettor 92; first and second detectors D1 and D2 for detecting the position of clutch C; third, fourth and fifth detectors D3, D4 and D5 for detecting the positions of shift rod 61; sixth, seventh and eighth detectors D6, D7 and D8 for detecting the positions of shift arm 63; ninth detector D9 for detecting the road speed of the automobile; tenth detector D10 for detecting engine speed; and trigger switch D11 operable by accelerator pedal 90.

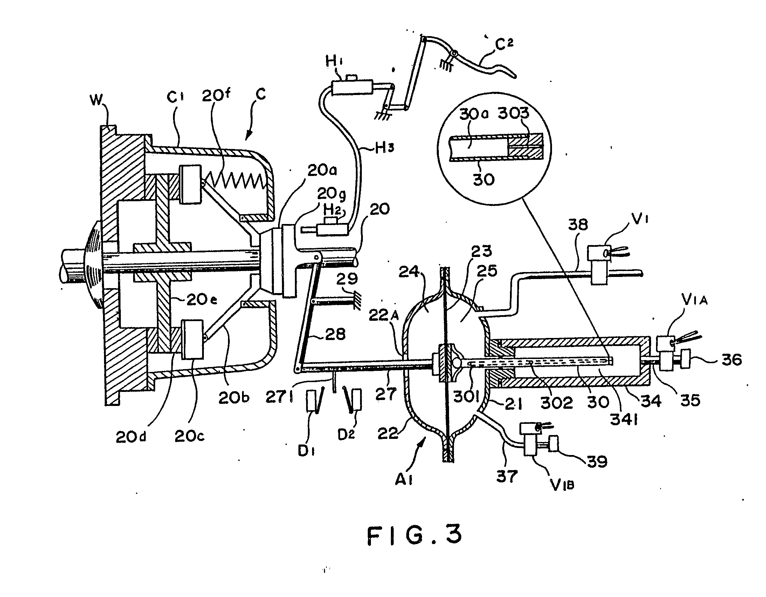

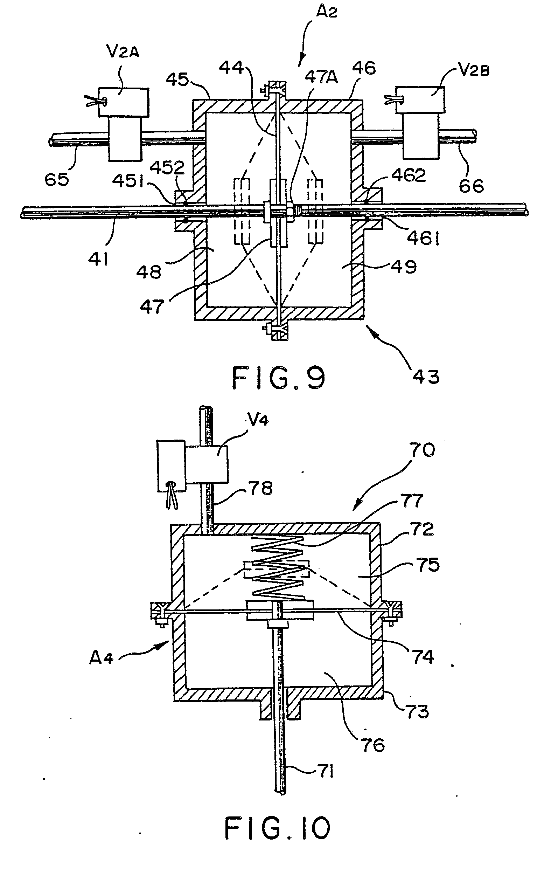

First actuator A1 is of a single-acting type shown in Fig. 3 to be described later. Fourth, fifth and sixth actuators A4, A5 and A6 are of another single-acting type, whose typical construction is illustrated in Fig. 10 taking fourth actuator A4 as an example, each having a diaphragm therein to form an acting chamber at ˙one side of the diaphragm to be communicated with a vacuum reservoir 10 with appropriate conduits provided with solenoid-operated valves namely, first, fourth, fifth and sixth solenoid valves V1, V4, V5 and V6, respectively. Vacuum reservoir 10 communicates with intake manifold M of the engine with appropriate conduit 10C, so as to maintain a vacuum in vacuum reservoir 10 when the engine is running.

Second and third actuators A2 and A3 are of the double-acting type, whose typical construction is illustrated in Fig. 9 taking second actuator A2 as an example, each having a diaphragm therein to form two acting chambers, one at each side of the diaphragm, to communicate with vacuum reservoir 10 with appropriate conduits having second A, second B, third A and third B solenoid valves V2A, V2B, V3A and V3B, respectively.

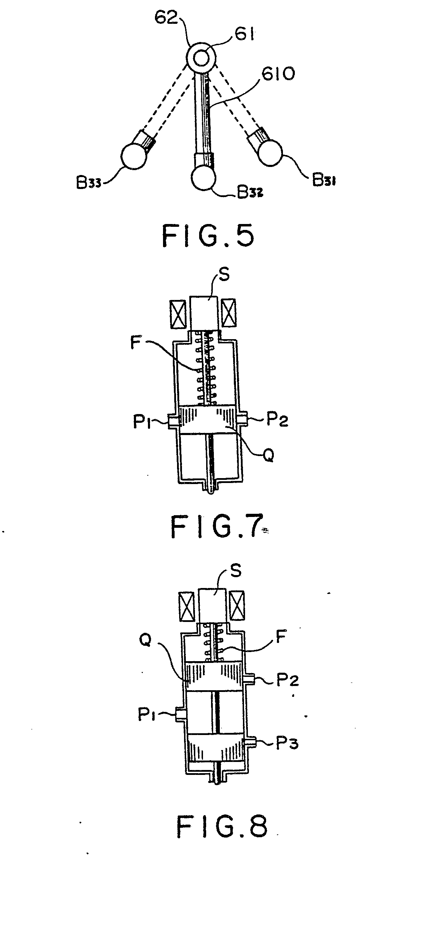

Solenoid valves V1, V1A and V1B are of the two-way type as shown in Fig. 7, each having a solenoid S, plunger Q operable by solenoid S, first port P1 and second port P2, spring F to urge plunger Q in a position to close a passage communicating first and second ports P1 and P2. When solenoid S is energized, it pulls plunger Q to open the passage and when solenoid S is de-energized plunger Q is pushed back by spring F to close the passage.

Solenoid valves V2A, V2B, V3A, V3B, V4, V5 and V6 are each of the three-way type as shown in the drawing; S is a solenoid, Q is a plunger, P1 is a port connected to the acting chamber of the actuator, P2 is a port connected to vacuum reservoir 10, P3 is a port communicating with atmosphere and F is spring. Ports P1 and P2 communicate when solenoid S is energized to pull plunger Q upwards, thus allowing the acting chamber to be connected to vacuum through ports P1 and P2. Port P2 is closed and ports P1 and P3 communicate when solenoid S is de-energized to allow plunger Q to move downwards by the force of spring F, thus allowing atmosphere to be admitted into the acting chamber through ports P3 and P1 to break the vacuum.

The device of this invention is further provided with control unit U to which first through tenth detectors and the trigger switch are electrically connected for delivering relevant control signals to the control unit when respective members move, while the solenoid valves are also electrically connected to the control unit so as to receive relevant operation signals from the control unit for operating respective solenoid valves to allow the vacuum to act on respective actuators to perform the designated operations.

The operational principle and the general arrangement of the device of this invention has been outlined above. The details of each component will now be described as follows.

Fig. 3 shows the general arrangement and construction of the first actuator A1 in connection with disc clutch assembly C. In the drawing, W is a flywheel transmitting the output of the engine; C1 is a clutch housing mounted on flywheel W; 20 is a drive shaft having one end rotatably supported by flywheel W, and the other end operatively connected to an input shaft, not shown, of transmission T, not shown; 20e is a clutch plate or driven plate splined onto drive shaft 20; 20C is a pressure plate; 20a is a release bearing rotatably and slidably mounted on drive shaft 20; 20b are release levers pivotally supported by clutch housing C1 each having one end pivotally connected to pressure plate 20C and the other end disposed in abutment with an inner surface of release bearing 20a. 20f are clutch springs for urging pressure plate 20C and clutch plate 20e against flywheel W. Release bearing 20a is provided with a release collar 20g operatively connected to first actuator A1, 20d is a lining.

First actuator A1 comprises first half casing 21 joined with second half casing 22, diaphragm 23 fixedly disposed between first and second half casings 21 and 22 to form acting chamber 25 and free chamber 24, acting chamber 25 being sealed airtight and communicating with vacuum reservoir 10, not shown, with vacuum tube 38 provided with first solenoid valve V1; and free chamber 24 communicating with atmosphere through central opening 22A. Diaphragm 23 is provided with a push rod 27 having an inner end fixedly mounted on the free chamber side thereof and an outer end extending outwardly through central opening 22A, the outer end being operatively connected to release collar 20g with a clutch lever 28 which is pivotally supported by a frame structure 29. On the acting chamber side of diaphragm 23 there is provided a hollow rod 30 having an inner end fixedly connected to diaphragm 23 and an outer end extending through first half casing 21 into a restricting device 34 having an inner end fixed to first half casing 21 and an outer end provided with a vent tube 35 having first auxiliary solenoid valve V1A. The outer end of hollow rod 30 is provided with an orifice 303 as shown in the inset of the drawing and extending into interior chamber 341 of restricting device 34. Hollow rod 30 is provided with a hollow interior 30a having first opening 301 at the inner end thereof, and second opening 302 at a suitable place.

First half casing 21 is further provided with a vent tube 37 having second auxiliary solenoid valve V1B. First and second auxiliary solenoid valves V1A and V1B are respectively provided with air filters 36 and 39.

When first solenoid valve V1 is energized, acting chamber 25 is open to vacuum and diaphragm 23 is pulled toward first half casing 21, thus causing push rod 27 to move in the same direction, and consequently clutch lever 28 is pivoted to push inwards release bearing 20a to disengage clutch plate 20e from the flywheel W. As soon as first solenoid valve V1 is de-energized, acting chamber 25 is isolated from the vacuum source as first solenoid valve V1 is of the two way type which only performs opening and closing of the passage of vacuum tube 38 and no atmosphere will be introduced into acting chamber 25 when the passage is closed. At this moment, first auxiliary valve V1A is energized to admit air into its interior 341, thus allowing air to be drawn into acting chamber 25 through orifice 303, second opening 302, hollow interior 30a and first opening 301 and allowing clutch plate 20e to be engaged with flywheel W by the force of clutch spring 20f.

Second opening 302 is so disposed to be closed by the inner end portion of throttle device 34 as soon as hollow rod 30 moves inwards, thus causing the admitted air to flow through orifice 303 only, which restricts the flow of air and slows down the engagement process of the clutch, so that an abrupt engagement of the clutch may be avoided.

Second auxiliary solenoid valve V1B is adapted to admit air to acting chamber 25 whenever a quick engagement of the clutch is necessary.

Push rod 27 is provided with dog 271, and first and second detectors D1 and D2. First detector D1 which may be a micro-switch is activated by dog 271 when push rod 27 is moved outwardly to engage the clutch. Second detector D2, which may also be a micro-switch, is activated by dog 271 when push rod 27 is moved inwardly to disengage the clutch.

In the preferred embodiment clutch C is provided with a conventional clutch pedal C2 adapted to operate a hydraulic system having hydraulic cylinders H1 and H2, and a tube H3 communicating hydraulic cylinders H1 and H2, for pushing release collar 20g, so that the clutch may be disengaged by depressing clutch pedal C2 independent from first actuator A1, if one wishes to operate the device manually.

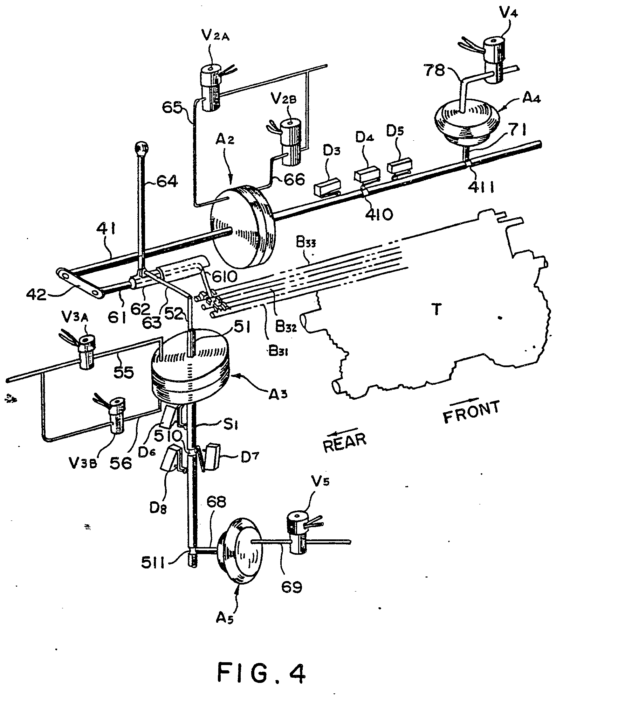

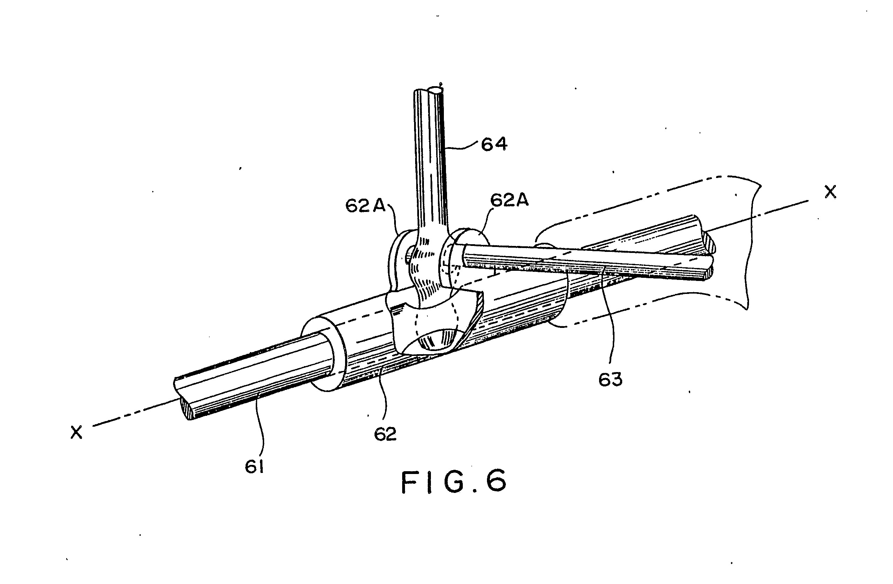

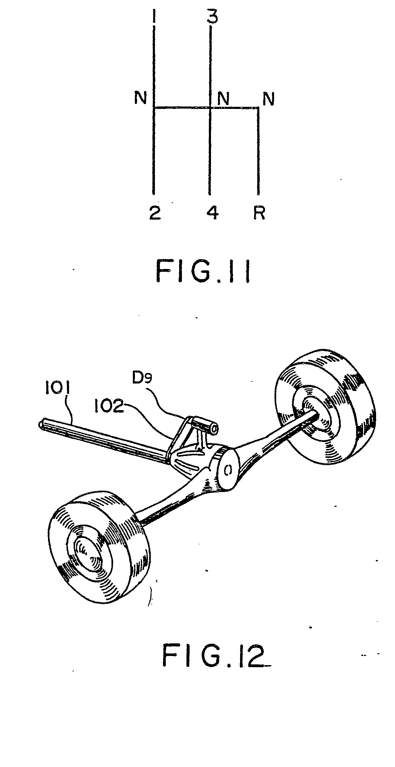

Referring now to Fig. 4, in which is shown the arrangement of the actuators and related detectors for operating the transmission which is generally designated by T, and is a gear-shift type transmission, having four forward speeds and one reverse position as shown in Fig. 11, by way of example. Transmission T is provided with first shift bar B31, second shift bar B32 and third shift bar B33 each capable of moving longitudinally to perform the gear shifting to change the gear ratio, or speed, each shift bar having front, neutral, and rear positions with respective gear ratio, or speed, designated as follows:

| Shift bar | front position | neutral position | rear position |
| --- | --- | --- | --- |
| B31 | 2nd speed | neutral | 1st speed |
| B32 | 4th speed | neutral | 3rd speed |
| B33 | reverse | neutral | not used |

It is to be understood that the above designation of speeds with respect to shift bar positions is for illustration purposes only and is not to limit the scope of this invention as the designation can be changed without affecting the principle and the construction of the device of this invention.

Each shift bar is provided with a fork-like portion to be selectively engaged with a shift finger 610 provided on shift rod 61, which is operable by shift lever 64 and also by second actuator A2 having a push rod 41 connected to shift rod 61 with connecting plate 42, shift rod 61 being capable of rotating with respect to connecting plate 42. Shift lever 64 is also connected to shift arm 63 operable by third actuator A3 having a push rod 51 connected thereto with connecting link 52.

Fig. 6 shows the details of the connection of shift lever 64 with shift rod 61 and with shift arm 63. As shown in the drawing shift lever 64 is pivotally supported by one end of shift arm 63 which is rotatably supported by a pair of brackets 62A integrally formed with sleeve 62 in which shift rod 61 is slidably inserted. Sleeve 62 having opening 61A into which a lower extension of shift lever 64 extends, so that shift rod 61 is moved longitudinally when shift lever 64 is moved to pivot with respect to the end of shift arm 63 on which shift lever 61 is pivotally supported, or when second actuator A2 is actuated and push rod 41 is moved longitudinally. Sleeve 62 is rotatably supported by a frame structure, not shown, so that shift rod 61 and sleeve 62 can be rotated with respect to their own center axis X—X by moving shift lever 64 laterally to pivot with respect to center axis X—X. In other words, shift rod 61 is rotated when third actuator A3 is actuated and push rod 51 is moved vertically.

The construction of second actuator A2 is shown in Fig. 9 to be described below. Third actuator A3 is identical with second actuator A2.

As shown in Fig. 9, second actuator A2 comprises first half casing 45 joined with second half casing 46; a diaphragm 44 disposed therebetween to form first acting chamber 48 and second acting chamber 49; push rod 41 extending through both half casings 45, 46 and diaphragm 44; push rod 41 being fixed onto diaphragm 44 with washers 47 and nut 47A, and also slidably supported by first and second half casings 45 and 46 having seals 452 and 462 provided to ensure the airtightness of first and second acting chambers 48 and 49.

First and second acting chambers 48 and 49 respectively communicate with vacuum reservoir 10, not shown, with vacuum tubes 65, 66 respectively provided with second A and second B solenoid valves V2A, V2B, which are also shown in Fig. 4.

Similarly, third actuator A3 (Fig. 4) is provided with first and second acting chamber respectively communicating with vacuum reservoir 10, (shown in Fig. 1) with vacuum tubes 55, 56 respectively provided with third A and third B solenoid valves V3A, V3B as shown in Fig. 4.

As shown in Fig. 4 shift rod 61 is provided with shift finger 610 capable of selectively engaging with the fork-like portions of first, second and third shift bars B31, B32, B33. The selection of engagement of shift finger 610 with the fork-like portions of the shift bars is performed by rotating shift rod 61, as shown in Fig. 5. The selection is possible only when the shift bars are all at the neutral position and the fork-like portions are aligned. The shift bar having its fork-like portion engaged with shift finger 610 is shifted longitudinally when shift rod 61 is moved longitudinally to perform a change of gear ratio or speed.

The selection of engagement of shift finger 610 with the fork-like portions of the shift bars is performed by either moving shift lever 64 laterally by hand or operating third actuator A3 to move push rod 51, wherein third actuator A3 is operated by energizing either solenoid valves V3A or V3B to allow either the first or the second acting chamber to be connected to vacuum. Similarly, longitudinal movement of shift rod 61 is performed by either moving shift lever 64 forwards or backwards by hand or by operating second actuator A2, wherein second actuator A2 is operated by energizing either solenoid valves V2A or V2B, to allow either the first or the second acting chambers to be connected to vacuum.

Furthermore, second actuator A2 is provided with third, fourth and fifth detectors D3, D4 and D5 and each may be a micro-switch, to be activated by a recess 410 formed on push rod 41. Third, fourth and fifth detectors D3, D4 and D5 are each adapted to deliver an electrical, control signal to the control unit when shift rod 61 is at the front, neutral and rear positions, respectively. Similarly, third actuator A3 is provided with sixth, seventh and eighth detectors D6, D7, D8 and each may be a micro-switch to be activated by a recess 510 formed on push rod 51, to deliver an electrical, control signal to the control unit when shift arm 63 is at its upper, neutral or lower positions or shift finger 610 is engaged with third shift bar B33, second shift bar B32 and first shift bar B31, respectively.

Second and third actuators A2, A3 are respectively provided with fourth and fifth actuators A4, A5 as shown in Fig. 4, fourth and fifth actuators respectively having push rods 71 and 68.

Push rod 51 is further provided with another recess 511 as shown in Fig. 4 to be engaged with push rod 68 of fifth actuator A5 when push rod 51 is at its neutral position or shift finger 610 is engaged with second shift bar B32. Fifth actuator A5 is of the single-acting type as shown in Fig. 7, having one acting chamber communicating with vacuum reservoir 10 by vacuum tube 69 provided with fifth solenoid valve V5. Similarly, push rod 41 is further provided with another recess 411 to be engaged with push rod 71 of fourth actuator A4 when push rod 41 is at its neutral position, fourth actuator A4 being of the single-acting type having one acting chamber communicating with the vacuum reservoir 10 by vacuum tube 78 provided with fourth solenoid valve V4.

In Fig. 10 there is shown the construction of a single-acting actuator, taking fourth actuator A4 as an example. The construction of fifth actuator A5 is identical with fourth actuator A4. In the drawing, 72 and 73 are half casings; 74 is a diaphragm having push rod 71 fixedly connected thereto; 75 is the acting chamber communicating with vacuum reservoir 10, not shown, by vacuum tube 78 having fourth solenoid valve V4; 77 is a compression spring adapted to urge diaphragm 74 to restore it to its position when the vacuum in acting chamber 75 is released and 76 is a free chamber communicating with the atmosphere.

Referring back to Fig. 4, push rod 68 of fifth actuator A5 engages with recess 511 so as to prevent push rod 68 from moving when fifth solenoid valve V5 is not energized. Push rod 68 is pushed to disengage from recess 511 when fifth solenoid valve V5 is energized to operate fifth actuator A5, thus enabling third actuator A3 to operate. Similarly, fourth actuator A4 is adapted to prevent push rod 41 or second actuator A2 from moving when fourth solenoid valve V4 is not energized, and second actuator A2 is free to operate when fourth solenoid valve V4 is energized to operate fourth actuator A4.

Referring back to Fig. 1, trigger switch D11, which may be a micro switch, is disposed in abutment with accelerator pedal 90 so that trigger switch D11 is activated as soon as accelerator pedal 90 is depressed by the foot, even with a slight touch.

Also as shown in Fig. 1, accelerator pedal 90 is operatively connected to first bell crank 93 with spring 91, first bell crank 93 being operatively connected to throttle valve 92A of carburettor 92 with first link 95, second bell crank 94 and second link 96. First bell crank 93 is provided with sixth actuator A6 having push rod 97 operatively connected therewith. Sixth actuator A6 is of single-acting type and is identical with fourth actuator A4 as shown in Fig. 10, having an acting chamber communicated with the vacuum reservoir by vacuum tube 98 provided with sixth solenoid valve V6. In this arrangement, sixth actuator A6 allows first bell crank 93 to be moved to open throttle valve 92A by pressing down accelerator pedal 90 when sixth solenoid valve V6 is not energized, but sixth actuator A6 pulls first bell crank 93 in the opposite direction to close throttle valve 92A as soon as sixth solenoid valve V6 is energized to operate sixth actuator A6.

Fig. 12 shows the arrangement of ninth detector D9 for detecting the automobile road speed. Ninth detector D9 may be a conventional tachometer-generator or a pulse generator driven by propeller shaft 101 of the automobile with belt 102 so as to deliver a control signal to the control unit in response to the road speed of the automobile. Ninth detector D9 may also be operatively coupled to a speedometer drive shaft of the automobile.

Tenth detector D10 (Fig. 1) may be a pulse transmitter, electrically connected to the ignition circuit, not shown, of the automobile so as to deliver a control signal to the control unit in response to engine speed.

Control unit U as shown in Fig. 1 is adapted to process the control signals delivered from first through tenth detectors D1—D10 and trigger switch D11 to deliver relevant operation signals to first through sixth actuator A1—A6 according to a pre-determined sequence program. Control unit U is also provided with a control panel B having push-button switches respectively designated by R, N, H, L1, L2 M/A to deliver relevant control signals to control unit U when they are respectively pushed, in which the meaning for each designation is as follows:

R for reverse,
N for neutral,
H for high gear, forward,
L1 for first low gear forward,
L2 for second low gear forward, and
M/A for selection of mode, automatic or manual,
in which R, N, H, L1 and L2 are each of single contact type, and M/A is a two-contact selection switch.

In Fig. 1, the signals delivered to and from the control unit U are each designated by the same designation of the respective detector or solenoid valve, e.g., D1 for the control signal delivered from first detector D1, and V1 for the operation signal delivered to first solenoid valve V1, etc.

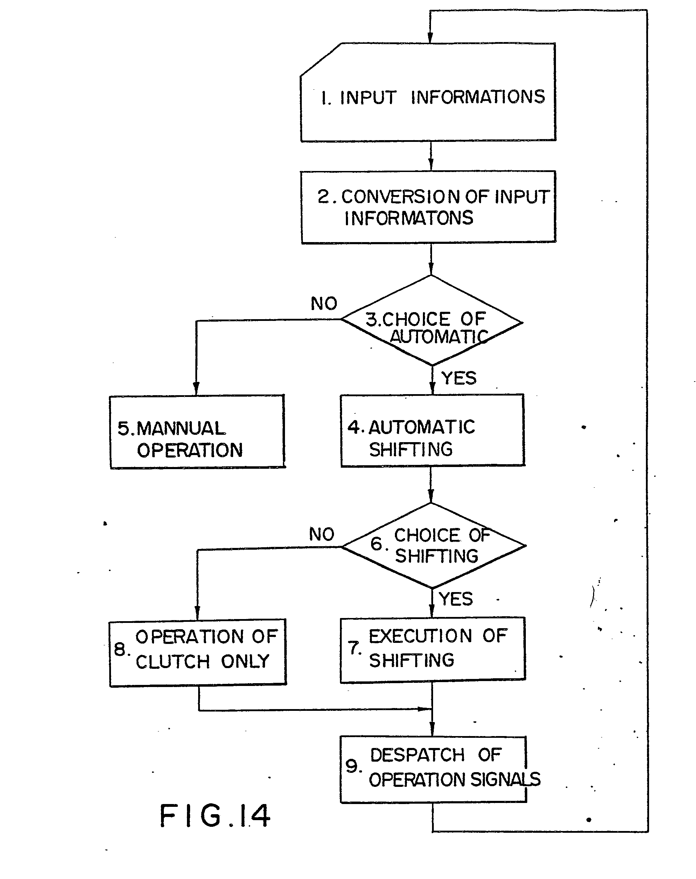

The program employed in the embodiment of the device of this invention is outlined in a flow chart shown in Fig. 14. As shown in the drawing, the program comprises the following steps:

1. Receiving input information. The input information includes: road speed, engine speed, accelerator position, automatic or manual selection, forward or reverse, speed range selection (on forward), and clutch and transmission gear position.
2. Exchange and processing of input information.
3. Choice of automatic or manual.
4. Automatic shifting of the transmission, to be based upon the road speed, if the mode selection switch is selected at "automatic" and the trigger switch is on.
5. Manual shifting, if the mode selection switch M/A is selected at "Manual".
6. Decision and selection of transmission gear.
7. Execution of shifting of the transmission.
8. Clutch operation only.
9. Output signal.

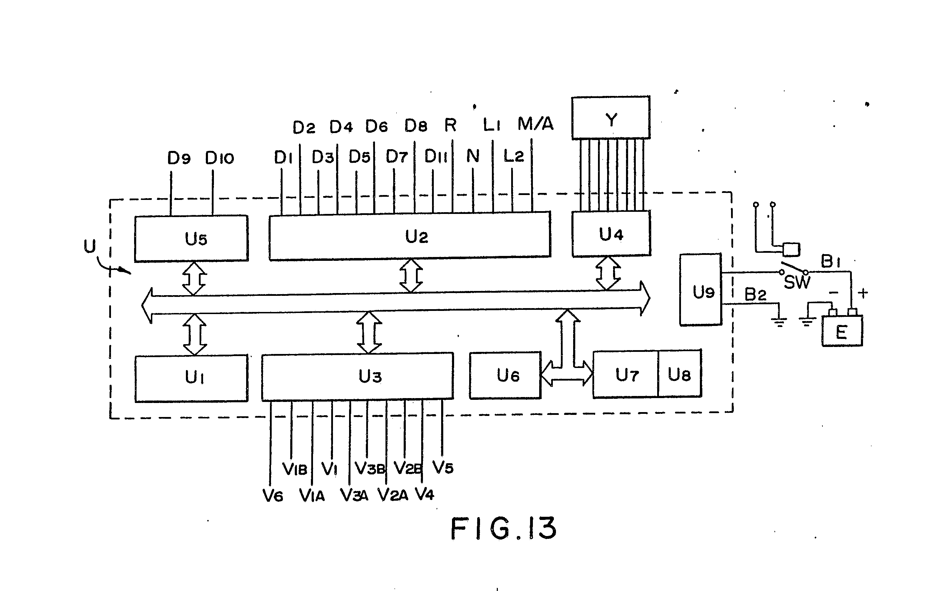

Fig. 13 shows a block diagram of the control unit of the device of this invention. In the drawing, the control unit is generally designated by U, which may be a Z-80 micro processor unit of Zilog Company, comprising:

a Z-80 CPU (control processing unit) generally designated by U1; three Z-80 P10) (periphery input output) U2, U3, U4;

a 2K byte EPROM No. 2716 (erasable programmable read only memory, or simply ROM) U6;

two 256 byte RAM No. 2114 (random access memory or simply RAM) U7, U8; and

a power supply U9.

Ninth and tenth detectors D9, D10 are electrically connected to counter timer controller U5 so that the control signals representing engine speed and the automobile road speed are delivered to counter timer controller U5. First through eighth detectors D1—D8, trigger switch D11 and control switches R, N, L1, L2, A/M are electrically connected to periphery input output U2 so that the control signal representing clutch position, transmission gear position and accelerator position are delivered to periphery input output U2. Solenoid valves V1, V2A, V2B, V1A, V1B, V4 and V5 are electrically connected to periphery input output U3 so that relevant operation signals to these solenoid valves are delivered from periphery input output. Periphery input output U4 is electrically connected to a digital display Y so as to indicate numerically the automobile road speed. Control processing unit U1 is adapted to deliver execution orders according to the instructions delivered by ROM U6 or RAMS U7 and U8. ROM is provided with a program as outlined above, which will be described later. Power supply U9 is adapted to supply power to each component member of control unit U, the power being supplied by battery E on the automobile with power lines B1, B2, wherein power line B1 is provided with a relay switch SW electrically connected to the ignition switch, not shown, of the automobile so that control unit U is energized when the ignition switch is turned on, and de-energized when the ignition switch is turned off.

The program as outlined above is stored in ROM U6 to operate the device of this invention to perform the following functions when the ignition switch of the automobile is turned on and the control unit energized accordingly. It is to be understood that during the operation process the engine is running and the vacuum is maintained in vacuum reservoir 10 (Fig. 1), and mode selection switch M/A is in the "automatic" position.

1. while the engine is running (at idling speed), and when accelerator pedal 90 is released and thus trigger switch D11 is not activated (i.e., the trigger is open), control unit U delivers operation signals to disengage clutch C and to maintain clutch C disengaged.
2. As soon as accelerator pedal 90 is depressed (or touched) by the foot, trigger switch D11 is activated (closed) and a control signal is delivered to control unit U, which then:

(1) delivers an operation signal to and activates the sixth solenoid valve V6, so as to allow vacuum to be applied to sixth actuator A6 to pull bell crank 93 and prevent bell crank 93 from being moved by acclerator pedal 90. In this process, spring 91 stretches to offset the movement of accelerator pedal 90 so that throttle valve 92A will not move even though accelerator pedal 90 is depressed;

(2) checks transmission gear position, automobile road speed, selector switch position (H, L1, or L2), and delivers relevant operation signals to solenoid valves V2A, V2B, V4 V3A, V3B, V5 respectively to perform "shifting" of the transmission into an appropriate transmission gear position within the following prescribed speed range:

(A) if selector switch position H is selected:

| transmission gear position | driving speed range Km/hr |
| --- | --- |
| 1st gear | 0—10 |
| 2nd gear | 10—20 |
| 3rd gear | 20—40 |
| 4th gear | over 40 |

(B) if selector switch position L1 is selected:

| transmission gear position | driving speed range |
| --- | --- |
| 1st gear | 0—15 |
| 2nd gear | 15—30 |
| 3rd gear | 30—45 |
| 4th gear | over 45 |

(C) if selector switch position L2 is selected:

| transmission gear position | driving speed range |
| --- | --- |
| 1st gear | 0—20 |
| 2nd gear | 20—35 |
| 3rd gear | 35—50 |
| 4th gear | over 50 |

(D) if selector switch R is selected: transmission is "shifted" to "R".
(E) if selector switch N is selected: transmission is shifted to neutral position.

(3) if the transmission gear position is not in the appropriate position with respect to the prescribed road speed range or direction, control unit U acts to deliver a series of operation signals to shift the transmission accordingly, the shifting operation being preceded by disengaging clutch C and followed by the engaging clutch C both by first actuator A1.

(4) As soon as the transmission is "shifted" to an appropriate gear position with respect to the automobile road speed, control unit U acts to de-energize solenoid valve V1 and in the meantime an operation signal is delivered to solenoid valve V1A so as slowly to break the vacuum in the first actuator A1 to allow clutch C to be engaged gently. In this process the automobile driving speed is checked; and if the driving speed is above a certain level, say over 50 Km/hr, another operation signal is delivered to solenoid valve V1B so as to break quickly the vacuum and quickly engage the clutch.

(5) As soon as the shifting of the transmission is completed and first solenoid valve V1 is de-energized to allow clutch C to be engaged, sixth solenoid valve V6 is de-energized to release sixth actuator A6 so that bell crank 93 may be operated by the accelerator pedal and thus the throttle valve of the carburettor may be opened to accelerate the engine. The driving speed ranges prescribed in the above operation (A), (B) and (C) can be conveniently changed depending on the horsepower capacity of the engine with respect to the pay load capacity of the automobile, as well as at the preference of the driver. The change of the aforesaid driving speed ranges can be done by replacing the program stored in ROM U6, which is an erasable programmable read only memory and is of great advantage for this purpose.

3. The above operation (A), (B) and (C) are performed while the automobile is moving forwards or at a stop and operation (D) is performed only while the automobile is at a stop or moving backwards.

4. The clutch is disengaged when accelerator pedal 90 is released (trigger switch D11 is opened) and the automobile road speed falls down to the lower limit of the speed range of the transmission gear position at which the automobile is being driven.

The actual use and operation of the device of this invention will be described as follows, with reference to Fig. 1.

Firstly, the engine is started and the "automatic" position of mode selection switch M/A is selected and selector switch H is pushed. Secondly, the accelerator pedal 90 is depressed by the foot, thus causing trigger switch D11 to close; control unit U then acts to activate sixth actuator 46 so that throttle valve 92A of carburettor 92 will not move until the gear shifting is completed and the engine will not accelerate immediately; in the meantime clutch C is disengaged, transmission T is "shifted" to first gear and then the clutch is gently engaged.

In this process the second, third, fourth and fifth solenoid valves and the second, third, fourth and fifth actuators operate in the following order:

Assuming the transmission is initially in the neutral position:

1. fifth solenoid valve V5 is energized to actuate fifth actuator A5, allowing push rod 51 to move;
2. third A solenoid valve V3A is energized to actuate third actuator A3, causing shift arm 63 to move upwards thus causing shift rod 61 to rotate and shift finger to engage with first shaft bar B31;
3. fourth solenoid valve V4 is energized to actuate fourth actuator, allowing push rod 41 to move;
4. second B solenoid valve V2B is energized to actuate second actuator A2, causing shift rod 61 to move toward the from end to shift the transmission into the first gear;
5. fourth and fifth solenoid valves V4, V5 are de-energized so as to cause push rods 71 and 68 to resiliently abut on push rods 41 and 51 respectively.

During the process of engaging clutch C, actuator A6 is released and throttle valve 92A of carburettor 92 is allowed to move and thus the engine is accelerated. As soon as the automobile road speed increases to over 10 Km/hr, control unit U acts to cause transmission T to shift from the first gear to the second gear. In this process:

1. fourth solenoid valve V4 is energized;
2. second B solenoid valve V2B is de-energized and second A solenoid valve V2A is energized simultaneously, so that shift rod 61, and first shift bar B31, are moved from the first gear to the second gear position without stopping at the neutral position; and then
3. fourth solenoid valve V4 is de-energized.

The shifting operation is preceded by a disengagement operation of clutch C and followed by an engagement operation of clutch C. As soon as clutch C is disengaged, sixth actuator A6 is activated to close the throttle valve so as to slow down the engine speed until clutch C is reengaged. Sixth actuator A6 is then released to allow the throttle valve to be opened by depressed accelerator pedal 90.

As soon as the driving speed increase to over 20 Km/hr, transmission is shifted to the third gear in the similar manner as described above. In this process:

1. second A solenoid valve V2A is de-energized and second B solenoid valve V2B is energized simultaneously so that shift rod 61 and first shift bar L1 are moved back from the second gear but are stopped at the neutral position as push rod 71, being urged by the spring in fourth actuator A4, engages with slot 411 to stop the movement of push rod 41;
2. third B solenoid valve V3B is energized and third A solenoid is de-energized simultaneously, so as to move shift arm 63 downwards, and shift finger 610 from shift bar B31 but to be stopped at second shift bar B32 as push rod 68, being urged by the spring in fifth actuator A5, engages with slot 511 to stop further movement of push rod 51; then
3. fourth solenoid valve V4 is energized to allow push rod 41 to move further, thus allowing shift rod 61, and second shift bar B32, to move to the third gear position.

The similar process is repeated as the automobile road speed continues to increase, until it reaches over 40 Km/hr, and transmission T is shifted to the fourth gear, accordingly.

When accelerator pedal 90 is released from being depressed, while at the fourth gear, for example, when one wants to slow the road speed, trigger switch D11 is caused to open, thus causing transmission T to remain at the fourth gear. When the driving speed slows to 40 Km/hr, which is the lower speed limit of the fourth speed, control unit U acts to cause clutch C to disengage and remain disengaged. This enables the automobile to further slow down as one applies the brake to the moving automobile.

When the driver wants to speed up the automobile after the automobile has slowed down to a certain speed, say 15 Km/hr, he can simple depress or touch accelerator pedal 90. Then trigger switch D11 is closed and control unit U acts to check the transmission gear position which is to fourth gear, with respect to the road speed which is 15 Km/hr, and thereby the shifting of transmission T accompanied with the acceleration of engine speed takes place, until transmission T is shifted to the second gear to which the road speed of 15 Km/hr belongs, and then clutch C is engaged and the throttle valve is moved to speed up the engine. A similar process is performed when the automobile is brought to a stop and is then moved again.

When the driver wants to back up the automobile from moving forwards, firstly, accelerator pedal 90 is released (and the brake is applied). Second, selector switch R is pushed by hand and accelerator pedal 90 is depressed. In the first step the automobile will be slowed down and clutch C will be disengaged automatically, and in the second step transmission T will be shifted to "reverse" as soon as the automobile comes to a complete stop, and then the automobile will be accelerated to move backwards.

When the driver wants to move the automobile forwards after backing it up, he can first release accelerator pedal 90 and apply the brake, and second push down selector switch H and depress accelerator pedal 90. The transmission will be automatically shifted from "reverse" to the first gear.

When the automobile comes to an up-slope at a certain speed, say in fourth gear, the transmission will be automatically shifted down to the third gear as soon as the road speed falls below 40 Km/hr and the accelerator pedal is kept depressed to keep the trigger switch D11 closed. However, if the driver wants to maintain a driving speed of over 40 Km/hr while moving up the slope, he may push down selector switch L1 which enables the automobile to drive over 40 up to 45 Km/hr in third gear, provided that the horsepower capacity of the engine is sufficient for maintaining that driving speed on that slope. For steeper slopes selector switch L2 may be used.

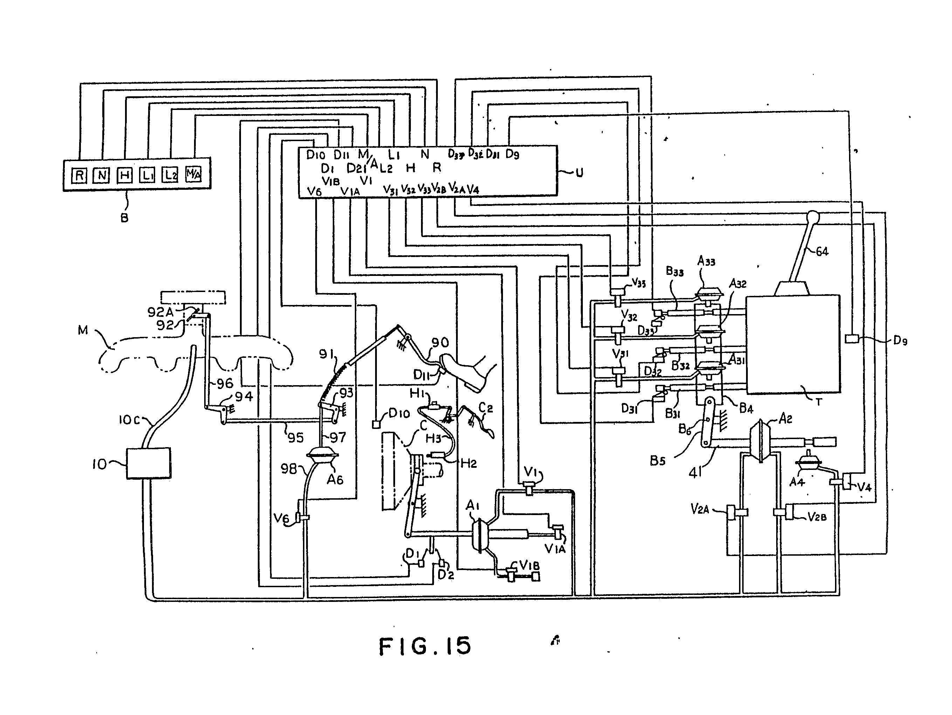

Fig. 15 shows a second embodiment of the automatic gear shifting device of this invention, which comprises a disc clutch C; a first actuator A1 for operating disc clutch C, a gear-shift type transmission T having a shift lever 64, shift bars B31, B32 and B33 selectively operable by shift lever 64 for changing the transmission gear positions, slide-block B4 slidably mounted over shift bars B31, B32 and B33; a second actuator A2 having push rod 41 operatively connected with slide-block B4 by link B5; a first auxiliary actuator A31 for selectively locking shift bar B31 onto slide-block B4; a second auxiliary actuator A32 for selectively locking shift bar B32 onto slide-block B4; a third auxiliary actuator A33 for selectively locking shift bar B33 onto slide-block B4; a third actuator A4 adapted to selectively hold rod 41 in a neutral position; a fourth actuator A6 adapted to operate throttle valve 92A of carburettor 92; first and second detectors D1 and D2 for detecting the position of clutch C; third, fourth and fifth detectors D31, D32 and D33 for detecting the positions of shift bars B31, B32 and B33; a sixth detector D9 for detecting the road speed of the automobile; a seventh detector D10 for detecting engine speed; and a trigger switch D11 operable by accelerator pedal 90; and a control unit U.

In the second embodiment the construction and arrangement of first actuator A1, second actuator A2, third actuator A4, and fourth actuator A6 are identical respectively to first actuator A1, second actuator A2, fourth actuator A4 and sixth actuator A6 of the first embodiment; and the construction and arrangement of first, second, sixth and seventh detectors D1, D2, D9 and D10 and trigger switch D11 are identical respectively to first, second, ninth and tenth detectors D1, D2, D9 and D10 and trigger switch D11 of the first embodiment.

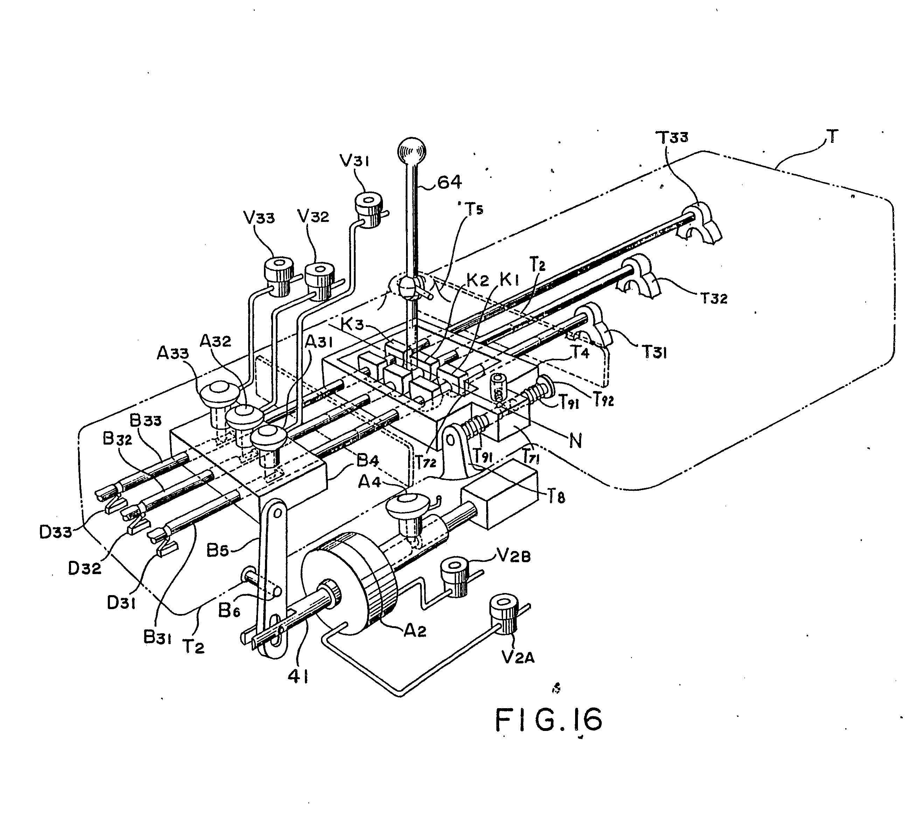

Referring to Fig. 16, shift bars B31, B32 and B33 of the second embodiment of this invention are slidably supported by structural parts T2 of transmission T, each of said shift bars B31, B32 and B33 having one end respectively connected to shift forks T31, T32 and T33 for shifting the corresponding gear members, not shown, and the other end slidably inserted through slide-block B4 which is pivotally connected to one end of link B5. Link B5 is pivotally supported at hinge B6 by a structural part of transmission T, with the other end pivotally connected to push rod 41 of second actuator A2.

Each shift bar B31, B32 and B33 is further provided with an actuator first, second and third auxiliary actuators A31, A32 and A33 respectively which is fixedly mounted onto slide-block B4 and adapted to selectively lock its respective shift bar into slide-block B4 or to allow its respective shift bar to slide freely therethrough.

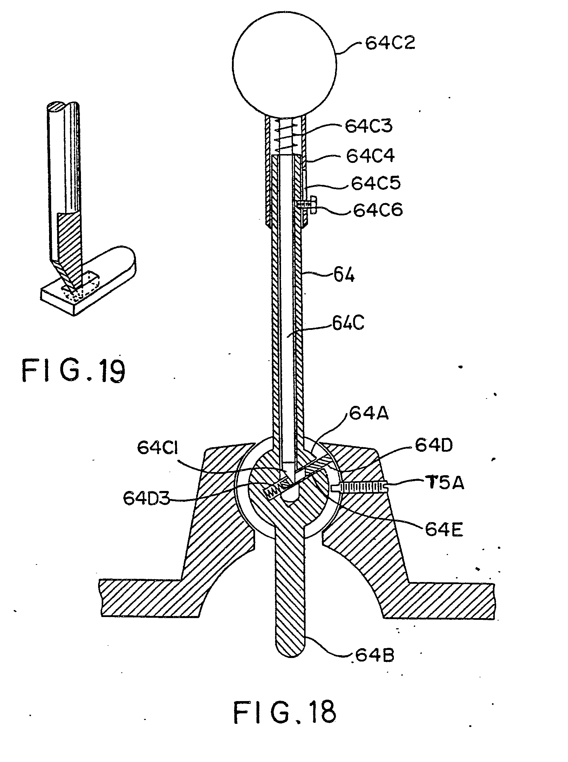

Shift bars B31, B32 and B33 are further provided a frame T4 through which said shift bars B31, B32 and B33 are slidably inserted, and in which fork-like portions K1, K2 and K3 are respectively placed as shown in the drawing. As shown in Fig. 18, transmission T is provided with a shift lever 64 having a ball joint 64A rotatably supported by swivel seat T5 formed on transmission T, said shift lever 64 also having a lower end 64B capable of selectively engaging with said fork-like portions K1, K2 and K3 when the three fork-like portions are aligned laterally in a neutral position N so as to move the corresponding shiftbars longitudinally. Gear positions can be changed manually by operating shift lever 64 as in conventional gear-shift type transmission.

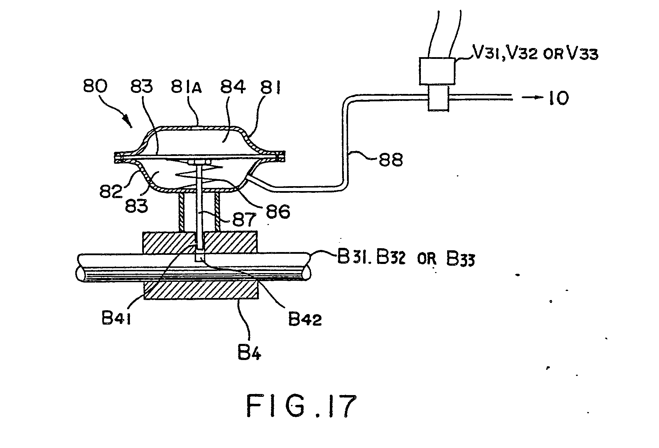

Each of first, second and third auxiliary actuators A31, A32 and A33 comprises a diaphragm chamber 80 as shown in Fig. 17. Diaphragm chamber 80 is provided with first half casing 81 joined with second half casing 82, a diaphragm 83 fixedly disposed between first and second half casing 81 and 82 to form acting chamber 85 and free chamber 84, acting chamber 85 being sealed airtight and communicating with vacuum reservoir 10, not shown, with each vacuum tube 88 being provided with a solenoid valve (valves V31, V32 or V33 respectively) of three-way type as shown in Fig. 8, and free chamber 84 communicating with the atmosphere through central opening 81A. Diaphragm 83 is provided with a push rod 87 having one end fixed thereon and the other end extending outwardly through second half casing 82, said other end of push rod 87 being so arranged as to extend through an opening B41 provided in slide-block B4 so as to engage with a slot B42 provided on respective shift bars B31, B32 and B33 when its respective solenoid valve V31, V32 or V33 is energized to allow the vacuum in vacuum reservoir 10 to act on its acting chamber 85. A spring 86 is provided to urge diaphragm 83 towards free chamber 84 so that when solenoid valve V31, V32 and V33 is de-energized to admit air into acting chamber 85, push rod 87 is retracted and disengaged from slot B42. This arrangement enables shift bars B31, B32 and B33 to be selectively locked onto slide block B4 when their respective solenoid valves V31, V32 and V33 are energized to actuate respective first, second or third auxiliary actuators A31, A32 and A33, so that the respective shift bars may be operated with slide-block B4 and link B5 by second actuator A2. When solenoid valves V31, V32 and V33 are de-energized, their respective shift-bars B31, B32 and B33 are freed to slide through slide-block B4.

Furthermore, shift-bars B31, B32 and B33 are respectively provided with third, fourth and fifth detectors D31, D32 and D33 which are adapted to deliver an electric signal to control unit U when slot B42 of each respective shift bar is in the neutral position.

With this arrangement, the control unit U, upon receipt of the electric signals delivered by the third, fourth and fifth detectors D31, D32 and D33 are so designed that only one of the three solenoid valves V31, V32 and V33 will be energized when all of the three shift bars B31, B32 and B33 are in the neutral position, and the solenoid valves V31, V32 and V33 will not be de-energized unless their respective shift-bars are in the neutral position.

Referring again to Fig. 16, frame T is provided with a projection T71 and a recess T72, said projection T71 being provided with a retaining rod T92 which is slidably inserted therethrough and fixedly supported by bracket T8 provided on the structural part of transmission T. Said retaining rod T92 is further provided with a pair of springs T91, one on each opposite side of projection T71, so as to resiliently retain said frame T4 in the neutral position N where recess T72 is aligned with the three fork-like portions K1, K2 and K3 when the transmission is in the neutral position.

As shown in Fig. 18, shift lever 64 is provided with an inner stick 64C slidably inserted therein, said inner stick 64C having a tapered lower end 64C1, and enlarged upper end 64C2, outer sleeve 64C4 fixed onto said enlarged upper end 64C2 and slidably passed over the upper end of shift lever 64, and a spring 64C3 adapted to urge said inner stick upwards. Outer sleeve 64C4 is provided with an elongated slot 64C5 through which a capscrew 64C6 is provided to slidably hold sleeve 64C4 onto shift lever 64.

Ball joint 64A is provided with a cavity 64E through which a latch plate 64D is slidably inserted. Latch 64D is provided with a slot 64D2 and a tongue 64D1 as shown in Fig. 19, and a spring 64D3 so disposed to urge said latch plate 64D outwards as shown in Fig. 18. Tapered end 64C1 of inner stick 64C is disposed in said slot 64D2 so as to normally allow tongue 64D1 of latch plate 64D to extend beyond the outer surface of ball joint 64A. When inner stick 64C is pushed downwardly to cause tapered lower end 64C1 to further move into slot 64D2 of latch 64D, latch plate 64D is moved inwardly by the wedge action and tongue 64D1 is retracted into cavity 64E.

Swivel seat T5 is provided with a key T5A to be engaged with tongue 64D1 so as to retain shift lever 64 in a free position to be described below.

While the shift-bars B31, B32, and B33 are in the neutral position N, fork-like portions K1, K2 and K3 are aligned with recess T72 of frame T4, thus enabling lower end 64B of shift-lever to be moved into recess Y72 by pushing shift lever 64 further laterally. Above said key T5A is so disposed that when lower end 64B mf shift-lever 64 is engaged with fork-like portion K1, which is immediately adjacent to recess T72, tongue 64D1 engages key T5A whereby the further lateral movement of lower end 64B of shift lever 64 towards recess T72 is prevented. In other words, one must push inner stick 64C down to retract tongue 64D1 of latch plate 64D in order to move lower end 64B of shift lever 64 into recess T72. As soon as inner stick 64C is pushed down to retract latch plate 64D and lower end 64B is moved into recess T72 of frame T4, latch plate 64D has moved over key T5A and can then be allowed to extend by releasing inner stick 64C; then tongue 64D1 is again engaged with key T5A so as to prevent lower end 64B of shift lever 64 from moving apart from recess T72 without first pushing inner stick 64C downwards.

The arrangement of latch plate 64D, recess T72 for keeping lower end 64B of shift lever 64 in a free position, or away from fork-like portions K1, K2 and K3 enables the movements of shift bars B31, B32 and B33 by the automatic shifting device of this invention without causing the shift lever to move while in automatic operation.

In the event one wishes to switch from automatic operation to manual operation while shift-lever 64 is in the above described free position, shift lever 64 may be moved in longitudinal direction first before pushing inner stick 64C downwards, so as to move frams T4 longitudinally. The longitudinal movement of frame T4 enables all fork-like portions K1, K2 and K3 to be moved to the neutral position N to align with recess T72, so as to ensure that lower end 64B of shift lever 64 engages with one of the fork-like portions K1, K2 and K3 when making such a switch.

Needless to say, the automatic operation can be performed without the need of moving shift lever 64 into the aforesaid free position.

In the automatic operation, the device according to the second embodiment operation in the same manner as that of the first embodiment, except that in the second embodiment the selection of gear position is executed by energizing solenoid valves V31, V32 or V33 to lock appropriate shift bars B31, B32 or B33 into slide-block B4 so that the respective shift-bars might be moved by second actuator A2, while in the first embodiment one of the two auxiliary solenoid valves V3A and V3B is to be energized in order to select one of the three shift bars B31, B32 and B33 to be moved by second actuator A2.

Although a preferred embodiment employing a vacuum produced in the intake manifold of the engine of an automobile has been described and illustrated, however, it is to be understood that compressed air is equally applicable to the device of this invention with a re-arrangement of actuators. The compressed air may be supplied from the compressed air system of the automobiles in which air brakes are employed. Furthermore, a pressurized fluid can also be used in placed of vacuum with a modification of actuators and with an addition of a return line from each actuator and each solenoid valve. The pressurized fluid may be supplied from the hydraulic system of the automobiles in which a hydraulic power steering or hydraulic power brakes are used. It is to be further understood that other modifications and re-arrangement are possible by those having ordinary skill in the art, without departing from the principles and scope of this invention as defined in the appended claims.

**Claims**

1. An automatic gear shifting device for use in an automobile having a transmission (T) having gears assembled to be selectively shifted to transmit power from an engine to a drive axle of an automobile at a predetermined gear ratio and having a plurality of transmission gear positions each achieving a specific gear ratio; and a clutch device (C) capable of engaging to transmit and disengaging to interrupt power from the engine to said transmission (T); said automatic gear shifting device comprising detectors (D1—D10) for detecting engine speed, automobile road speed, transmission gear position, clutch position and for delivering electrical control signals responsive to engine speed, transmission gear position and clutch position; actuators (A1—A6) provided with a flexible diaphragm (23) operable by a vacuum produced in an intake passage (M) of the engine of the automobile for performing the gear shifting of said transmission (T), engaging and disengaging of said clutch device and opening and closing of a throttle valve (92A) of the automobile valve means (V1, V2A, V2B, V3A, V3B, V4, V5 and V6) operable by electrical operation signals for admitting and interrupting said vacuum to said actuators (A1—A6); and a control unit (U) adapted to receive said electrical control signals and produce said electrical operation signals in response to said electrical control signals in accordance with a program to cause said valve means (V1—V6) to operate so that the actuators and consequently the throttle valve (92A), clutch device (C) and transmission (T) operate in association with each other to change the gear ratio to meet the driving speed and load conditions of the automobile; characterised in that said automatic gear shifting device has an accelerator pedal (90) provided with a trigger switch (D11) for delivering a signal in response to the movement of said accelerator pedal (90) for delivering a signal to said control unit (U) to cause said control unit (U) to deliver operation signals to said actuators (A1—A6) according to a predetermined sequence program; and said transmission (T) is provided with a shift lever (64) for manually changing the gear positions, said clutch device (C) is provided with a foot pedal (C2) for manually engaging and disengaging said clutch device (C) and said control unit (U) is provided with a mode selection switch (8-M/A) for enabling said control unit (U) to function when said switch (8-M/A) is turned in one position, and for enabling the transmission (T) to be operated manually by said shift lever (64) and the clutch device (C) to be operated manually by said foot pedal (C2) when said switch (8-M/A) is turned in another position.

2. An automatic gear shifting device as recited in claim 1, wherein said clutch device (C) is provided with a release collar (20 g); said transmission (T) is provided with a shift rod (61) having a longitudinal axis, said shift rod (61) being capable of moving longitudinally to perform the shifting of the gears and rotating with respect to the longitudinal axis to perform gear selection; and said actuators comprise a first actuator (A1) operatively connected to said release collar (20 g), a second actuator (A2) operatively connected to said shift rod (61) to cause said shift rod (61) to move longitudinally, a third actuator (A3) operatively connected to said shift rod (61) to cause said shift rod (61) to rotate with respect to its longitudinal axis, a fourth actuator (A4) for selectively preventing said shift rod (61) from moving longitudinally, a fifth actuator (A5) for selectively preventing said shift rod (61) from rotating with respect to its longitudinal axis, and a sixth actuator (A6) operatively connected to the throttle valve (92A).

3. An automatic gear shifting device as recited in claim 2, wherein said first actuator (A1) comprises two half casings (21, 22) joined together and having a flexible diaphragm (23) disposed between said half casings (21, 22); and a push rod (27) fixedly connected to said flexible diaphragm (23); a restricting device (34) for selectively restricting the movement of said push rod (27), said restricting device (34) being operable by an operation signal delivered by said control unit (U); and a quick relieving device (V1B) to selectively enable said push rod to move freely, said quick relieving device (V1B) being operable by an operation signal delivered by said control unit (U).

4. An automatic gear shifting device as recited in claim 1, wherein said program comprises a predetermined speed range for each transmission gear position having an upper limit and a lower limit; an operation sequence for operating the clutch device (C) and transmission (T) to be executed when a trigger switch (D11) is closed and when the automobile road speed is not within the predetermined speed range of the transmission gear position at which the automobile is being driven; including:
   1) closing the throttle valve (92A);
   2) disengaging the clutch (C);
   3) shifting the transmission gear to the position to which the actual road speed belongs;
   4) engaging the clutch (C);

5) operating a restriction device (34), or quick relieving device (V1B) depending upon the engine speed and road speed at the moment of engaging the clutch; and

an operation sequence for operating the clutch device (C) when said trigger switch D11 is opened, including:

1) disengaging the clutch (C) when the road speed decreases to the lower limit of the speed range of the transmission position at which the automobile is being driven;

2) engaging the clutch (C) when the road speed increases from the lower limit of the speed range of the transmission position at which the automobile is being driven.

5. An automatic gear shifting device as recited in claim 4, wherein said control unit (U) is provided with a speed range selector switch (8) and said program further comprises a second predetermined speed range for each transmission position, said second predetermined speed range being applicable upon closing of said speed range selector switch (8).

6. An automatic gear shifting device as recited in claim 1 or claim 4, wherein said control unit (U) comprises an errasable programmable read only memory in which said program is stored.

7. An automobile having an automatic gear shifting device as recited in claim 1.

8. An automatic gear shifting device as recited in claim 1, wherein said clutch device (C) is provided with a release collar (20 g); said transmission (T) is provided with a plurality of shift bars (B31, B32, B33) adapted to move longitudinally to perform shifting of gears in and from various positions and a slide block (B4) in which said plurality of shift bars (B31, B32, B33) is slidably inserted; and said actuators comprise: a first actuator (A1) operatively connected to said release collar (20 g), a second actuator (A2) having a push rod (61) operatively connected to said slide block (B4) to move longitudinally, a plurality of auxiliary actuators (A31, A32, A33) fixedly mounted on said slide block (B4) each adapted to selectively lock or unlock one of said plurality of shift bars (B31, B32, B33); and a fourth actuator (A4) for selectively preventing said push rod (61) from moving.

9. An automatic gear shifting device as recited in claim 8, wherein said transmission (T) is further provided with shift lever (64) having a ball joint (64a) rotatably supported by a swivel seat (T5) on the upper part of said transmission (T), said shift lever (64) having a lower end (64B); and each of said plurality of shift bars (B31, B32, B33) being further provided with a fork-like portion (K1, K2, K3) adapted to be selectively engaged with said lower end (64B) of said shift lever (64); and a frame (T4) through which said plurality of shift bars (B31, B32, B33) are slidably inserted, said frame (T4) having a recess (T72) capable of receiving said lower end (64B) of said shift lever (64) when said plurality of shift bars (B31, B32, B33) is aligned on the neutral position so as to keep said lower end 64B of said shift lever (64) away from said shift bars (B31, B32, B33); said frame (T4) also being capable of moving along said shift bars (B31, B32, B33) and aligning said fork-like portions (K1, K2, K3) in the neutral position by moving said shift lever (64) in the longitudinal direction while said lower end (64B) of said shift lever (64) is received by said recess of said frame (T4).

10. An automatic gear shifting device as recited in claim 9, wherein said shift lever (64) is further provided with a locking device (64D) adapted to selectively allow or prevent the engagement or disengagement of said lower end (64B) of said shift lever (64) with said recess (T72) to said frame (T4) and an inner stick (64C) slidably inserted in said shift lever (64) for operating said locking device (64D).

11. An automatic gear shifting device as recited in claim 10, wherein said locking device (64D) comprises a latch plate (64D1) slidably inserted in said ball joint (64A) of said shift lever (64), said latch plate (64D) having a tongue capable of extending out and retracting into said ball joint (64A); a spring (64D3) urging said latch plate (64D) to cause said tongue to extend; a key (T5A) provided in the said swivel seat of said transmission, said key (T5A) being adapted to engage with said tongue of said latch plate (64D) when said lower end (64A) of said shift lever (64) is engaged with said recess (T72) of said frame; and wherein said inner stick is provided with a tapered lower end (64C1) adapted to be slidably inserted into a slot formed in said latch plate (64D) so as to cause said latch plate (64D) to retract when said inner stick (64C) is pushed downwards to cause said tapered lower end (64C1) to slide with respect to said slot of said latch plate; and a spring (64C3) to urge said inner stick (64C) upwardly.

## Patentansprüche

1. Automatische Getriebe-Schaltvorrichtung für den Gebrauch in Verbindung mit einem Automobil, mit einem Wechselgetriebe (T) mit einer wahlweise schaltbaren Zahnradanordnung für die Kraftübertragung von einem Motor zu einer Antriebsachse des Automobils unter einem vorbestimmten Übersetzungsverhältnis, und mit einer Anzahl von Gangstufen, durch die je ein spezifisches Übersetzungsverhältnis erreicht wird, und mit einer Kupplungsvorrichtung (C) für die Kraftübertragung im eingekuppelten und für die Kraftunterbrechung im ausgekuppelten Zustand zwischen Motor und Wechselgetriebe, und mit der Getriebe-Schaltvorrichtung zugeordneten Detektoren (D1—D10) für das Detektieren der Motordrehzahl, Fahrgeschwindigkeit des Fahrzeuges auf der Straße, der Gangstufe des Wechselgetriebes, der Schaltlage der Kupplung und für die Abgabe von elektrischen Steuersignalen in Abhängigkeit der Motordrehzahl, der Gangstufe und der Kupplungs-Schaltlage, mit Stellgliedern (A1—A6) mit einer flexiblen Membrane (23), die über ein in der Ausaugleitung des Fahrzeugmotors erzeugtes Vakuum betätigbar sind, für das Schalten des Wechselgetriebes (T), das Ein- aus Auskuppeln der Kupplungsvorrichtung und für das Öffnen und Schließen eines den Automobil-Ventilgliedern (V1, V2A, V2B, V3A, V3B, V4, V5 und V6) zugeordneten Drosselventils (92A), die über elektrische Betätigungs-Signale auslösbar sind für das Anlegen und Unterbrechen des genannten Vakuums an die genannten Stellglieder (A1—A6), und mit einer Steuereinheit (U), die geeignet ist, die elektrischen Steuersignale zu empfangen und in Abhängigkeit dieser Steuersignale die Betätigungs-Signale in Übereinstimmung mit einem Program zu erzeugen, um die genannten Ventilglieder (V1—V6) derart zu betätigen, daß die Stellglieder und damit das Drosselventil (92A), die Kupplungsvorrichtung und das Wechselgetriebe in Übereinstimmung miteinander arbeiten, um durch Wechsel des Übersetzungsverhältnisses die Antriebsgeschwindigkeit und die Lastbedingungen des Automobils zu erreichen, dadurch gekennzeichnet, daß die Getriebe-Schaltvorrichtung ein Beschleunigungspedal (90) aufweist, dem ein Trigger-Schalter (D11) zugeordnet, ist zwecks Abgabe eines Signals in Abhängigkeit der Bewegung des Beschleunigungspedals (90) an die Steuereinheit (U), um diese zu veranlassen, Betätigungs-Signale an die Stellglieder (A1—A6) in Übereinstimmung mit einem vorbestimmten Folgeprogramm zu liefern, daß das Wechselgetriebe (T) mit einem Schalthebel (64) für das manuelle Wechseln der Gangstufe versehen ist, daß die Kupplungsvorrichtung (C) mit einem Fußpedal (C2) für das manuelle Ein- und Auskuppeln versehen ist, und daß die Steuereinheit (U) mit einem Mode-Wahl-Schalter (8-M/A) versehen ist, um die Steuereinheit (U) einzuschalten, sobald der Mode-Wahl-Schalter (8-M/A) in die eine Schaltposition gebracht ist, und um das Wechselgetriebe (T) mittels des Schalthebels (64) und die Kupplung (C) über das Fußpedal (C2) manuell schalten zu können, wenn der Mode-Wahl-Schalter (8-M/A) in die andere Schaltposition gebracht ist.

2. Automatische Getriebe-Schaltvorrichtung nach Anspruch 1, dadurch gekennzeichnet, daß die Kupplungsvorrichtung (C) mit einem Auslösebund (20 g) versehen ist, daß das Wechselgetriebe (C1 mit einer eine Längsachse aufweisende Schubstange (61) versehen ist, die in Längsrichtung beweglich ist, um die Zahnräder der Zahnrad-Anordnung verschieben zu können, und die um die Längsachse drehbar ist, um die Wahl der Gangstufen zu bewirken, und daß die Stellglieder ein erstes, mit dem Auslösebund in Wirkverbindung stehendes Stellglied (A1), ein zweites, mit der Schubstange (61) in Wirkverbindung stehendes Stellglied (A2) zwecks Bewegens der Schubstange in Längsrichtung, ein drittes, mit der Schubstange (61) in Wirkverbindung stehendes Stellglied (A3) zwecks Drehens der Schubstange (61) um die Längsachse, ein viertes Stellglied (A4) zur wahlweisen Verhinderung der Längsbewegung der Schubstange (61), ein fünftes Stellglied (A5) zur wahlweisen Verhinderung der Drehbewegung der Schubstange um die Längsachse und ein mit dem Drosselventile (92A) in Wirkverbindung stehendes sechstes Stellglied (A6) umfassen.

3. Automatische Getriebe-Schaltvorrichtung nach Anspruch 2, dadurch gekennzeichnet, daß das erste Stellglied (A1) zwei Gehäusehälften (21, 22) aufweist, die miteinander verbunden sind und zwischen denen eine flexible Membrane (23) eingespannt ist, daß eine mit der Membrane (23) fest verbundene Schubstange (27) vorgesehen ist, daß eine Begrenzungs-Vorrichtung (34) durch ein von der Steuereinheit (U) geliefertes Betätigungs-Signal einschaltbar ist, und daß eine Schnell-Entlastungsvorrichtung (V1B) vorgesehen ist, über die die Schubstange wahlweise in die Lage versetzt wird, sich frei zu bewegen, wobei die Schnell-Entlastungsvorrichtung (V1B) durch ein von der Steuereinheit (U) geliefertes Betätigungs-Signal auslösbar ist.

4. Automatische Getriebe-Schaltvorrichtung nach Anspruch 1, dadurch gekennzeichnet, daß das Folgeprogramm für die Gangstufe einen vorbestimmten Geschwindigkeitsbereich sowie eine Betätigungsfolge für das Betätigen Kupplungs-Vorrichtung (C) und das Wechselgetriebe (T) umfaßt, die dann ausgelöst wird, wenn der Trigger-Schalter (D11) geschlossen ist und wenn die Fahrgeschwindigkeit des Automobils auf der Straße nicht innerhalb des vorbestimmten Geschwindigkeitsbereiches der Gangstufe liegt, mit dem das Automobil angetrieben ist, wobei das Folgeprogramm folgende Schritte umfaßt:

1) Schließen des Drosselventils (92A),
2) Auskuppeln der Kupplung (C),
3) Schalten der Getrieberäder in die Gangstufe, die der augenblicklichen Fahrgeschwindigkeit zugehört,
4) Einkuppeln der Kupplung (C),
5) Einschalten der Begrenzungs-Vorrichtung (34) oder der Schnell-Entlastungsvorrichtung (V1B),

in Abhängigkeit der Motordrehzahl und Fahrgeschwindigkeit im Augenblick des Einkuppeln, und eine Arbeitssequenz für das Betätigen der Kupplungsvorrichtung (C), wenn der Trigger-Schalter (D11) geöffnet ist, die folgende Schritte umfaßt:

1) Entkuppeln der Kupplung (C), wenn die Fahrgeschwindigkeit die untere Grenze des Geschwindigkeitsbereiches der Gangstufe des Wechselgetriebes unterschreitet, mit der das Automobil angetrieben ist, und

2) Einkuppeln der Kupplung (C), wenn die Fahrgeschwindigkeit über die untere Grenze des Geschwindigkeitsbereiches der Gangstufe des Wechselgetriebes ansteigt, mit der das Automobil angetrieben ist.

5. Automatische Getriebe-Schaltvorrichtung nach Anspruch 4, dadurch gekennzeichnet, daß die Steuereinheit (U) einen Geschwindigkeits-

bereichs-Wahlschalter (8) aufweist und daß das Folgeprogramm ferner einen zweiten vorbestimmten Geschwindigkeitsbereich für jede Gangstufe umfaßt, der jeweils nach Schließen des Geschwindigkeitsbereichs-Wahlschalters (8) wirksam wird.

6. Automatische Getriebe-Schaltvorrichtung nach Anspruch 1 oder 4, dadurch gekennzeichnet, daß die Steuereinheit (U) einen löschbaren, programmierbaren ROM-Speicher umfaßt, in dem das Folgeprogramm eingespeichert ist.

7. Automobil, gekennzeichnet durch eine automatische Getriebe-Schaltvorrichtung nach Anspruch 1.

8. Automatische Getriebe-Schaltvorrichtung nach Anspruch 1, dadurch gekennzeichnet, daß die Kupplungsvorrichtung (C) einen Auslösebund (20 g) aufweist, daß dem Wechselgetriebe (T) eine Vielzahl von längsbeweglichen Schubstangen (B31, B32, B33) zugeordnet ist, durch die die Zahnräder in und aus verschiedenen Gangstufen verschiebbar sind, wobei ein Gleitblock (B4) vorgesehen ist, in den die Schubstangen (B31, B32, B33) verschiebbar eingesetzt sind, und daß die Stellglieder ein erstes, mit dem Auslösebund (20 g) in Wirkverbindung stehendes Stellglied (A1), ein zweites, über eine in Längsrichtung bewegliche Schubstange (61) mit dem Gleitblock (B4) in Wirkverbindung stehendes Stellglied (A2) und eine Mehrzahl von an dem Gleitblock fest angeordneten Hilfs-Stellgliedern (A31, A32, A33) umfassen für das selektive Festlegen oder Freigeben je einer der Schubstangen (B31, B32, B33), und daß ein viertes Stellglied (A4) für das wahlweise Verhindern der Bewegung der Schubstange (61) vorgesehen ist.

9. Automatische Getriebe-Schaltvorrichtung nach Anspruch 8, dadurch gekennzeichnet, daß das Wechselgetriebe (T) ferner mit einem Schalthebel (64) versehen ist, der über ein von einem auf dem Oberteil des Wechselgetriebes (T) angeordneten Drehsitz (T5) getragenen Kugelgelenk (64a) drehbeweglich gelagert ist und eine unteres Ende (64B) aufweist, daß jede der Schubstangen (B31, B32, B33) mit einem gabelförmigen Teil (K1, K2, K3) versehen ist, die jeweils wahlweise mit dem unteren Ende (64B) des Schalthebels (64) in Eingriff bringbar sind, und daß ein Rahmen (T4) vorgesehen ist, durch den die Schubstangen (B31, B32, B33) verschiebbar gelagert eingesetzt sind, wobei dieser Rahmen (T4) eine Ausnehmung (T72) aufweist zwecks Aufnahme des unteren Endes (64B) des Schalthebels (64), wenn alle Schubstangen (B31, B32, B33) in einer neutralen Lage ausgerichtet sind, so daß das untere Ende (64B) des Schalthebels (64) von den Schubstangen weggehalten ist, und wobei dieser Rahmen (T4) ferner geeignet ist, sich längs der Schubstangen (B31, B32, B33) zu bewegen und die gabelförmigen Teile (K1, K2, K3) ein einer neutralen Lage auszurichten durch Bewegen des Schalthebels (64) in Längsrichtung, solange das untere Ende des Schalthebels (64) in die Ausnehmung des Rahmens (T4) eingreift.

10. Automatische Getriebe-Schaltvorrichtung nach Anspruch 9, dadurch gekennzeichnet, daß dem Schalthebel (64) ferner eine Sperrvorrichtung (64D) zugeordnet ist, durch die das Ineingriff- oder das Außereingriff-Bringen des unteren Endes (64B) des Schalthebels (64) mit der Ausnehmung (T72) des Rahmens (T4) wahlweise ermöglicht oder verhindert wird, und daß ein innerer Stab (64C) für das Betätigen der Sperrvorrichtung (64D) in den Schalthebel (64) verschiebbar eingesetzt ist.

11. Automatische Getriebe-Schaltvorrichtung nach Anspruch 10, dadurch gekennzeichnet, daß die Sperrvorrichtung (64D) eine Sperrplatte (64D) aufweist, die verschiebbar in das Kugelgelenk (64A) eingesetzt ist, wobei die Sperrplatte (64D) eine aus dem Kugelgelenk ausfahrbare und in dieses zinziehbare Zunge aufweist, daß eine die Sperrplatte beaufschlagende und dabei die Zunge ausfahrende Feder (64D3) vorgesehen ist, daß ein Keil (T5A) im auf dem Wechselgetriebe angeordneten Drehsitz vorgesehen ist, der mit der Zunge der Sperrplatte (64D) in Wirkverbindung bringbar ist, wenn das untere Ende (64A) des Schalthebels (64) in die Ausnehmung (T72) des Rahmens eingreift, daß der innere Stab mit einem abgeschrägten unteren Ende (64C1) versehen ist zwecks schiebbaren Ineingriffbringens in einen Schlitz innerhalb der Sperrplatte (64D), um die Sperrplatte (64D) zurückzuziehen, wenn der innere Stab (64C) nach unten gedrückt wird und dabei das abgeschrägte untere Ende (64C1) in den Schlitz der Sperrplatte eingreift, und daß eine den inneren Stab aufwärts beaufschlagende Feder (64C3) vorgesehen ist.

**Revendications**

1. Dispositif de changement de vitesse automatique utilisable dans une automobile ayant une transmission (T) comportant des pignons assemblés pour pourvoir être sélectivement déplacés pour transmettre l'énergie motrice depuis un moteur à un arbre d'entraînement d'une automobile à un rapport de'engrenage prédéterminé et ayant une série de positions de pignon de transmission dont chacune correspond à un rapport d'engrenage spécifique; et un dispositif d'embrayage (C) capable de venir en et hors de contact pour transmettre ou non l'énergie motrice depuis le moteur vers ladite transmission (T); ledit dispositif de changement de vitesse automatique comprenant des détecteurs (D1—D10) pour détecter la vitesse du moteur, la vitesse routière de l'automobile, la position de l'engrenage de transmission, la position de l'embrayage et pour délivrer des signaux de commande électriques en réponse à la vitesse du moteur, à la position de l'engrenage de transmission et à la position de l'embrayage; des dispositifs de manoeuvre (A1—A6) munis d'un diaphragme flexible (23) actionnable par un vide produit dans un passage d'entrée (M) du moteur de l'automobile pour effectuer le changement de vitesse de ladite transmission (T), la venue en et hors de contact dudit dispositif d'embrayage et l'ouverture et la fermeture d'une vanne d'étranglement (92A) des moyens formant vanne dans l'automobile (V1, V2A, V2B, V3A, V3B, V4, V5 et V6) actionnables par des signaux électriques pour la mise en et hors communication dudit vide avec lesdites dispositifs de manoeuvre (A1—A6); et une unité de commande (U) adaptée à recevoir lesdits signaux de commande électriques et à produire lesdits signaux d'actionnement électriques en réponse auxdits signaux de commande électriques selon un programme pour faire que lesdits moyens formant vanne (V1—V6) fonctionnent de telle sorte que les dispositifs de manoeuvre et, par suite, la vanne d'étranglement (92A), le dispositif d'embrayage (C) et la transmission (T) fonctionnent en association les uns avec les autres pour modifier le rapport d'engrenage et satisfaire aux conditions de charge et de vitesse de conduite de l'automobile, caractérisé en ce que ledit dispositif de changement de vitesse automatique comporte une pédale d'accélérateur (90) pourvue d'un interrupteur à détente (D11) adapté à délivrer un signal en réponse au mouvement de ladite pédale d'accélérateur (90) pour délivrer un signal vers ladite unité de commande (U) et faire que ladite unité de commande (U) délivre des signaux d'actionnement audit dispositif de manoeuvre (A1—A6) selon un programme de séquences prédéterminées; et ladite transmission (T) est pourvue d'un levier de changement (64) pour changer manuellement la position des pignons, ledit dispositif d'embrayage (C) étant pourvu d'une pédale (C2) pour mettre en et hors de contact ledit dispositif d'embrayage (C) et ladite unité de commande (U) étant pourvue d'un interrupteur de sélection de mode (8-M/A) pour permettre à ladite unité de commande (U) de fonctionner lorsque ledit interrupteur (8-M/A) est tourné vers une position, et pour permettre de faire fonctionner non automatiquement la transmission (T) au moyen dudit levier de changement (64) et le dispositif d'embrayage (C) au moyen de le pédale (C2) lorsque ledit interrupteur (8-M/A) est tourné vers l'autre position.

2. Dispositif de changement de vitesse automatique selon la revendication 1, dans lequel ledit dispositif d'embrayage (C) est pourvu d'une frette de débrayage (20 g); ladite transmission (T) est pourvue d'une tringle de changement (61) ayant un axe longitudinal, ladite tringle de changement (61) étant capable de se déplacer longitudinalement pour effectuer le déplacement de pignons et de tourner par rapport à son axe longitudinal pour effectuer la sélection de pignon; et lesdits dispositifs de manoeuvre comprennent un premier dispositif de manoeuvre (A1) réuni opérationnellement à ladite frette de débrayage (20 g), un second dispositif de manoeuvre (A2) réuni opérationnellement à ladite tringle de changement (61) pour provoquer le déplacement longitudinal de ladite tringle de changement (61), un troisième dispositif de manoeuvre (A3) réuni opérationnellement à ladite tringle de changement (61) pour provoquer la rotation de ladite tringle de changement (61) par rapport à son axe longitudinal, un quatrième dispositif de manoeuvre (A4) pour empêcher sélectivement ladite tringle de changement (61) de se déplacer longitudinalement, un cinquième dispositif de manoeuvre (A5) pour empêcher sélectivement ladite tringle de changement (61) de tourner par rapport à son axe longitudinal, et un sixième dispositif de manoeuvre (A6) réuni opérationnellement à ladite vanne d'étranglement (92A).

3. Dispositif de changement de vitesse automatique selon la revendication 2, dans lequel ledit premier dispositif de manoeuvre (A1) comprend deux demi-caters (21, 22) réunis ensemble avec un diaphragme flexible (23) disposé entre lesdits demi-boîtiers (21, 22) et une tige de poussée (27) réunie fixement audit dispositif flexible (23); un dispositif restricteur (34) pour restreindre sélectivement le mouvement de ladite tige de poussée (27), ledit dispositif restricteur (34) étant actionnable par un signal de fonctionnement délivré par ladite unité de commande (U); et un dispositif de libération rapide (V1B) pour permettre sélectivement à ladite tige de poussée de se déplacer librement, ledit dispositif de libération rapide (V1B) étant actionnable par un signal de fonctionnement délivré par ladite unité de commande (U).

4. Dispositif de changement de vitesse automatique selon la revendication 1, caractérisé en ce que ledit programme comprend une gamme de vitesses prédéterminées pour chaque position de l'engrenage de transmission ayant une limite supérieure et une limite inférieure; une séquence de fonctionnement pour le fonctionnement du dispositif d'embrayage (C) et la transmission (T) à exécuter lorsqu'un interrupteur à détente (D11) est fermé et lorsque la vitesse routière de l'automobile n'est pas comprise dans la gamme de vitesses prédéterminées correspondant à la position de l'engrenage de transmission à laquelle l'automobile est conduite, ladite séquence comprenant:

1) la fermeture de la vanne d'étranglement (92A);

2) la mise hors de contact de l'embrayage (C);

3) le passage du pignon de transmission à la position correspondant à la vitesse routière réelle;

4) la venue en contact de l'embrayage (C);

5) le fonctionnement d'un dispositif restricteur (34), ou du dispositif de libération rapide (V1B) en fonction de la vitesse du moteur et de la vitesse routière ou moment de la venue en contact de l'embrayage; et

un séquence de fonctionnement pour actionner le dispositif d'embrayage (C) lorsque l'interrupteur à détente (D11) est ouvert, comprenant:

1) la mise hors de contact de l'embrayage (C) lorsque la vitesse routière décroît jusquà la limite inférieure de la gamme de vitesses correspondant à la position de la transmission à laquelle l'automobile est conduite;

2) la mise en contact de l'embrayage (C) lorsque la vitesse routière augmente depuis la limite inférieure de la gamme de vitesses correspondant à la position de transmission à laquelle l'automobile est conduite.

5. Dispositif de changement de vitesse automatique selon la revendication 4, dans lequel ladite unité de commande (U) est munie d'un interrupteur sélecteur de gamme de vitesses (8) et en ce que ledit programme comprend, en outre, une seconde gamme de vitesses prédéterminée pour chaque position de la transmission, ladite seconde gamme de vitesses prédéterminée étant applicable lors de la fermeture dudit interrupteur sélecteur de gamme de vitesses (8).

6. Dispositif de changement de vitesse automatique selon la revendication 1 ou la revendication 4, caractérisé en ce que ladite unité de commande (U) comprend une mémoire morte programmable, effaçable, dans laquelle le programme est stocké.

7. Automobile pourvue d'un dispositif de changement de vitesse automatique selon la revendication 1.

8. Dispositif de changement de vitesse automatique selon la revendication 1, dans lequel ledit dispositif d'embrayage (C) est pourvu d'une frette de débrayage (20 g); ladite transmission (T) est pourvue d'une série de tringles de changement (B31, B32, B33) adaptées à se déplacer longitudinalement pour effectuer le changement de pignon pour les amener dans et hors de différentes positions est un bloc de coulissage (B4) dans lequel est insérée, coulissante, ladite série de tringles de changement (B31, B32, B33); lesdits dispositifs de manoeuvre comprennent: un premier dispositif de manoeuvre (A1) réuni opérationnellement à ladite frette de débrayage (20 g), un second dispositif de manoeuvre (A2) ayant une tige de poussée (61) réunie opérationnellement audit bloc de coulissage (B4) pour se déplacer longitudinalement, une série de dispositifs de manoeuvre auxiliaires (A31, A32, A33) montés fixement sur ledit bloc de coulissage (B4) et dont chacun est adapté à verrouiller ou à déverrouiller sélectivement l'une des tringles de changement de ladite série (B31, B32, B33); et un quatrième dispositif de manoeuvre (A4) pour empêcher sélectivement ladite tige de poussée (61) de se déplacer.

9. Dispositif de changement de vitesse automatique selon la revendication 8, caractérisé en ce que ladite transmission (T) est munie, en outre, d'un levier de changement (64) ayant un joint à rotule (64a) supporté en rotation par un siège pivotant (T5) sur la partie supérieure de ladite transmission (T), ledit levier de changement (64) ayant une extrémité inférieure (64B) et chacune des tringles de changement de ladite série (B31, B32, B33) étant en outre pourvue d'une partie en fourche (K1, K2, K3) adaptée à venir sélectivement en prise avec l'extrémité inférieure (64B) dudit levier de changement (64); et un châssis (T4) au travers duquel ladite série de tringles de changement (B31, B32, B33) est montée coulissante, ledit châssis (T4) ayant un évidement (T72) capable de recevoir ladite extrémité inférieure (64B) dudit levier de changement (64) lorsque ladite série de tringles de changement (B31, B32, B33) est alignée sur la position neutre de façon à conserver l'extrémité inférieure (64B) dudit levier de changement (64) à l'écart desdites tringles de changement (B31, B32, B33); ledit châssis (T4) étant également capable de se déplacer le long desdites tringles de changement (B31, B32, B33) et d'aligner lesdites parties en fourche (K1, K2, K3) dans la position neutre pour déplacer ledit levier de changement (64) en direction longitudinale tandis que l'extrémité inférieure (64B) dudit levier de changement (64) est reçu dans ledit évidement dudit châssis (T4).

10. Dispositif du changement de vitesse automatique selon la revendication 9, caractérisé en ce que ledit levier de changement (64) est en outre muni d'un dispositif de verrouillage (64D) adapté à sélectivement permettre ou empêcher la venue en prise ou la mise hors de prise de ladite extrémité inférieure (64B) dudit levier de changement (64) dans ledit évidement (T72) dudit châssis (T4); et une tige intérieure (64C) montée coulissante dans ledit levier de changement (64) pour actionner ledit moyen de verrouillage (64D).

11. Dispositif de changement de vitesse automatique selon la revendication 10, dans lequel ledit dispositif de verrouillage comprend une plaque de verrouillage (64D) montée coulissante dans ledit joint à rotule (64A) dudit levier de changement (64), ladite plaque de verrouillage (64D) ayant une languette capable de s'étendre à l'extérieur ou d'être rétractée à l'intérieur dudit joint à rotule (64A); un ressort (64D3) repoussant ladite plaque de verrouillage (64D) pour faire que ladite languette soit en extension; une clé (T5A) prévue dans ledit siège pivotant de ladite transmission, ladite clé (T5A) étant adaptée à venir en contact avec ladite languette de ladite plaque de verrouillage (64D) lorsque ladite extrémité inférieure (64A) dudit levier de changement (64) est engagé dans ledit évidement (T72) dudit châssis; et dans lequel une tige interne est munie d'une extrémité inférieure en pointe (64C1) adaptée à être montée coulissante dans une fente formée dans ladite plaque de verrouillage (64D) pour provoquer le retrait de ladite plaque de verrouillage (64D) lorsque ladite tige interne (64C) est poussée ver le bas pour faire coulisser ladite extrémité inférieure en pointe (64C1) par rapport à ladite fente de ladite plaque de verrouillage; et un ressort (64C3) adapté à tirer ladite tige intérieure (64C) vers le haut.

FIG. 1

FIG.2

FIG.3

FIG. 4

FIG.6

FIG.5

FIG.7

FIG.8

FIG.9

FIG.10

FIG.11

FIG.12

FIG.13

1. INPUT INFORMATIONS

2. CONVERSION OF INPUT INFORMATONS

3. CHOICE OF AUTOMATIC

NO

YES

5. MANNUAL OPERATION

4. AUTOMATIC SHIFTING

6. CHOICE OF SHIFTING

NO

YES

8. OPERATION OF CLUTCH ONLY

7. EXECUTION OF SHIFTING

9. DESPATCH OF OPERATION SIGNALS

FIG.14

FIG.15

FIG. 16

0 079 114

FIG.17

64C2

64C3

64C4

64C5

64C6

64

64C

FIG.19

64A

64CI

64D

64D3

T5A

64E

64B

FIG.18

14